Europäisches Patentamt

European Patent Office

Office européen des brevets

(11) Publication number: **0 142 195**
A1

# (12) EUROPEAN PATENT APPLICATION

(21) Application number: **84201523.2**

(22) Date of filing: **22.10.84**

(51) Int. Cl.⁴: **A 01 K 11/00**
**G 09 F 3/00**

(30) Priority: **02.11.83 NL 8303778**

(43) Date of publication of application:
**22.05.85 Bulletin 85/21**

(84) Designated Contracting States:
**CH DE FR GB IT LI NL**

(71) Applicant: **Niemeijer, Halbe Jacobus**
**Hoogeveenseweg 21**
**NL-9435 TC Bruntinge(NL)**

(72) Inventor: **Niemeijer, Halbe Jacobus**
**Hoogeveenseweg 21**
**NL-9435 TC Bruntinge(NL)**

(54) Locking seal for sealing objects.

(57) A locking seal for sealing objects comprises a fixing pin (3) connected at a first end with a counter-element (8) and being clamped tight at the second end by a punctiform end part (4) with respect to a seal element (10). The fixing pin (3) is concentrically surrounded by a pressure element (7), a pressing part (28; 30a; 31a) of which is elastically movable in an axial direction with respect to the fixing pin (3).

FIG. 2

EP 0 142 195 A1

Locking seal for sealing objects.


The invention relates to locking seal for sealing objects comprising a fixing pin having at one end a punctiform end part, a counter-element connected with the other end of said fixing pin and a seal element, said fixing pin being pierced by the end part through the object to be sealed and subsequently clamped tight with respect to the seal element.

A locking seal of the kind set forth is known from Dutch Patent Application 8104082 laid up for public inspection. Such a locking seal is used on those objects, which are requiring a satisfactory check and/or identification on the object itself, for example for marking animals or plants. When used as an ear mark on an animal, the known locking seal is usually applied to the ear fairly soon after birth of the animal, when the ear still has limited thickness. The locking seal, in which the distance between the counter-element and the seal element is adapted to the ear thickness of the adult  animal, may therefore slide to and fro in the ear perforation. This may give rise to damage of the tissue and be a source of infection. Moreover, the locking seal may be an annoying object for the animal in the growing period which may stimulate the animal to remove the locking seal from the ear, which may result in tearing up the ear and loss of the locking seal. These inconveniences may also occur when the locking seal is applied to the ear of an adult animal whose ear thickness is smaller than the distance between the counter-element and the seal element of the locking seal.

When used as a mark on the leaf of a plant, having a limited thickness, the locking seal may slide to and fro in the leaf perforation, resulting in damage of the leaf. Thus the above mentioned inconveniences may also occur when the locking seal is applied to plants.

The invention has for its object to ensure optimum suitability of locking seal of the kind set forth for application to objects having thickness smaller than the distance between the counter-element and the seal element.

The invention is characterised in that the fixing pin is concentrically surrounded by a pressure element, which is located between the counter-element and the seal element after the end part is clamped tight, said pressure element being elastically movable in an axial direction with respect to the fixing pin by means of a pressing part.

In this way a locking seal is obtained which can effectively match the thickness of the object in a simple manner by means of the pressure element. Since the pressure element constantly bridges the amount of clearance between the surface of the object and the locking seal, the fixing pin remains satisfactorily positioned in the perforation, whilst swinging of the locking seal on the object is avoided. For example, when used as an ear mark on the ear of an animal, in this way damage to the tissue and hence any infection in the ear can be avoided. The animal will thus not feel the locking seal to be a nuisance. Owing to the permanent adaptation to the thickness of the object, the locking seal embodying the invention is particularly suitable for application to very young animals  or plants, whilst the locking seal can stay on the object for the full lifetime of the animal or plant.

A preferred embodiment of locking seal in accordance with the invention is characterised in that the pressure element comprises  apart from the pressing part an elastically compressible part being integral with said pressing part. It is thus ensured that the pressure element will be in satisfactory contact with the object by the pressing part and can effectively match the thickness of the object by the elastically compressible part.

By this intimate contact swinging of the locking seal on the object is avoided.

The elastically compressible part may be advantageously constructed in the form of bellows, of narrowing steps or of a funnel. In all forms the elastically compressible part can have the best elasticity for the optimum effect of the pressure element.

A further preferred embodiment of the locking seal in accordance with the invention is characterised in that the pressing part is formed by an annular plate part, the peripheral rim of which is rounded off. This ensures a satisfactory contact between the compressible part and the object, which contributes to a stable position of the locking seal.

A further preferred embodiment of the locking seal in accordance with the invention is characterised in that the end of the elastic compressible part remote from the pressing part is in engagement with the counter-element. In this way the application of the locking seal is not hindered by the pressing element, whilst the object can be satisfactorily clamped between the usually broad seal element and the pressing part.

Preferably the pressure element is made from a synthetic resin, so that it is suitable for mass production, whilst the elastic properties can be readily obtained by an appropriate selection of the synthetic material and the structure of the elastically compressible part.

The invention will be described more fully with reference to a few embodiments of locking seal illustrated in the drawing, to which the invention is, however, not limited.

Fig. 1 is an elevational view of locking seal embodying the invention in the closed position.

Fig. 2 is a sectional view taken on the lines II-II in Fig. 1.

Fig. 3 is a sectional view taken on the lines III-III in Fig. 1.

Fig. 4 is a sectional view like Fig. 2 of part of a second embodiment of locking seal in accordance with the invention.

Fig. 5 is a sectional view like Fig. 2 of part of a third embodiment of locking seal in accordance with the invention.

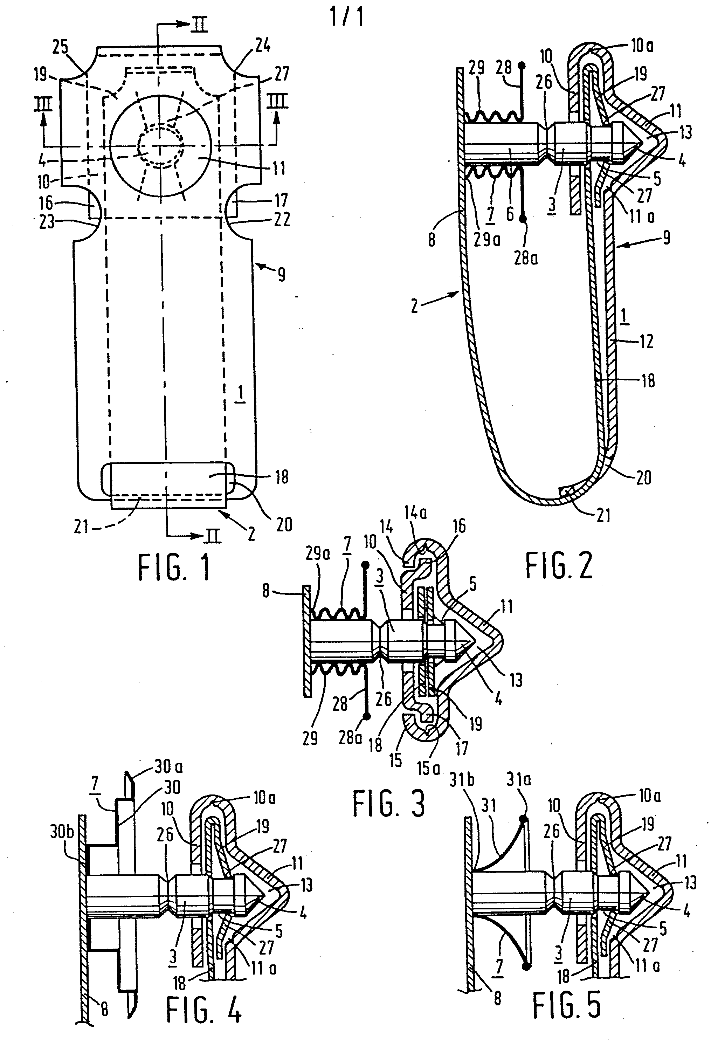

The locking seal shown in Figs. 1 to 3 comprises a seal element 1, a spring steel bracket 2 and a fixing pin 3. The galvanized steel fixing pin 3 has at one end a punctiform, preferably conical end part 4. Near the end part 4 the pin 3 has a continuous groove 5, which is adjoined by a cylindrical main part 6 of the pin. The main part 6 has a locally weakened part 26, where a breakdown occurs in an attempt to open the locking seal by force. Preferably the part 26 is located approximately midway the length of the pin 3. At the end remote from the end part 4 the pin 3 is welded to a first limb 8 of the bracket 2, said limb 8 forming the counter-element of the locking seal. Concentrical with the pin is a pressure element 7, comprising a pressing part formed by an annular plate part 28 and a bellows-shaped, elastically compressible part 29. The peripheral rim 28a of the plate part 28 is thickened and rounded off. The end 29a of the part 29 is preferably in engagement with the limb 8. The plate part 28 and the elastically compressible part 29 are integral with one another and are preferably made by spray casting from a synthetic resin.

The seal element 1 comprises a main plate 9 and a closing plate 10, which plates are made by bending through about 180° from a single sheet of, in this embodiment, aluminium. The main plate 9 comprises a fastening part 11 and an elongate main part 12, on which marks can be provided for identification and/or checking. The fastening part 11 is completely closed and has a conical bulging part by which the fastening part bounds a space 13 on one side, which is intended to accommodate the end part 4 of the pin 3. The conical shape of the bulging part is preferably adapted to the shape of the end part 4 so that the end part 4 can be intimately enclosed.

As is shown in Fig. 3 side edges 14 and 15 of the main plate are bent around lateral edges 16 and 17 of the closing plate 10, the edges 16 and 17 being bent with respect to the main face of the closing plate 10 in a manner such that the main face is located at a given distance from the part 11 of the main plate 9. Thus the space 13 is sufficiently large for receiving a second limb 18 of the bracket 2 together with a clamping plate 19. In a central part the clamping plate 19 has resilient clamping rims 27 forming together a clamping member for the pin 3. The clamping plate 19 is formed from the second limb 18 by bending it over through about 180°. Preferably the clamping plate is located on the outer side of the limb 18.

The seal element 1 is arranged on the second limb 18 by sliding the limb through a slot-shaped opening 20 in an inclined end part 21 of the main plate 9. By subsequently sliding the limb 18 into the space 13, the clamping plate 19 also enters said space. Then the resiliently pivotable limbs 8 and 18 ensure that the end part 4 of the pin 3 is held at a distance from the closing plate 10.

When applying the locking seal embodying the invention the pin 3 is pierced by means of appropriate pincers through the relevant part of the object, for example the ear of an animal to be marked, so that the end part 4 is pressed through a passage in the closing plate 10 into the space 13. Thus part of the object gets in between the limb 8 and the closing plate 10. In the space 13 the end part 4 can move through a passage in the limb 18 of the bracket 2. Subsequently, when passing along the clamping plate 19 the clamping rims 27 bend over in the direction towards the fastening part 11 and get into the groove 5 so that withdrawal of the pin 3 is not possible without visible damage of the locking seal.

The bent-over rims 14 and 15 of the main plate 9 cannot be disengaged from the closing plate 10 without visible deformations, for example, by grinding. Owing to the presence of incisions 14a and 15a (see Fig. 3) in the joint between the rims and the fastening part 11 any attempt of bending back the rims 14 and 15 will result in rupture of these rims. Such incisions 10a and 11a in the junction between the plate 10 and the part 11 and between the part 11 and the main part 12 render any attempt of opening the space 13 useless, since this would directly result in breaking of the parts concerned. Recesses 22, 23, 24 and 25 in the main plate 9 near the rims 14 and 15 not only contribute to an accurate fold of the rims 14 and 15, but also increase the detectability of said deformations of the rims 14 and 15. Owing to the recesses 22 and 23 the ends of the rims 17 and 16 respectively are directly perceptible, when the locking seal is applied, so that it can be assessed whether the closing plate 10 is still present (see Fig. 1).

By the manner of clamping of the punctiform end part 4 in the closed space 13, when the locking seal is being closed, it is ensured that locking seal once used cannot be rendered reusable. Therefore, the locking seal provides a very reliable means for identifying objects and a satisfactory safeguard against fraudulent manipulations with the objects, for example when used as an earmark on an animal or as a mark on the leaf of a plant.

The pressing element 7 enables the locking seal embodying the invention to effectively match the thickness of the object, such as the ear of an animal or the leaf of a plant to be marked. For example, when used as an earmark on an animal, the ear mark is usually applied directly after birth of the animal. At this time the ear of, for example, a calf, has a thickness of about 3 mms, whilst with regard to the ear thickness of an adult cow the ear mark leaves a distance of about 7 mms between the limb 8 and the plate 10. The amount of clearance between the surface of the calf's ear is filled out by the element 7, whilst the elastically compressible part 29 ensures intimate contact between the pressing part 28 and the ear so that the locking seal remains satisfactorily positioned and cannot swing around in a trouble-some manner so that damage of tissue and any resultant infection are avoided. The thickened, rounded-off peripheral rim 28a further improves the contact between the part 28 and the ear surface. During the growth of the animal and thickening of the ear the part 29 is compressed so that the part 28 is axially displaced towards the limb 8. Thus, the locking seal embodying the invention constantly matches the animal's growth and will not hinder the animal. For example, when used as a mark on the leaf of a plant, having a limited thickness, such as the leaf of an orchid, the locking seal matches the growth of the leaf and cannot slide or swing around in the leaf perforation, so that damage of the leaf is avoided.

Figs. 4 and 5 show that other shapes of the pressure element 7 are also conceivable. In the embodiment of Fig. 4 the pressure element 7 comprises an elastically compressible part 30 narrowing stepwise towards the end 30b. Dependent on the desired elastic properties the part 30 may have two steps or a different number of steps, for example, three or four. The pressing part 30a may have the form of a wedge-shaped plate part having a slightly rounded-off peripheral rim.

The embodiment of Fig. 5 comprises a pressure element 7 having a funnel-shaped, elastically compressible part 31 tapering away from the pressing part 31a and engaging by its end 31b the counter-element 8. In order to ensure the desired elastic properties the funnel-shaped part 31 is preferably slightly curved.

The locking seal with the pressure element 7 in one of the embodiments may be composed in a different way. For example, instead of using the bracket 2 it may be advantageous to use separate disposition of the counter-element and the seal element. In the case of separate disposition the fixing pin of the closed locking seal is the sole connecting part between the counter-element and the seal element.

Claims:

1.    A locking seal for sealing objects comprising a fixing pin having at one end a punctiform end part, a counter-element connected with the other end of said fixing pin and a seal element, said fixing pin being pierced by the end part through the object to be sealed and subsequently clamped tight with respect to the seal element, characterized in that the fixing pin (3) is concentrically surrounded by a pressure element (7), which is located between the counter-element (8) and the seal element (1) after the end part (4) is clamped tight, said pressure element being elastically movable in an axial direction with respect to the fixing pin by means of a pressing part (28; 30a; 31a).

2.    A locking seal as claimed in Claim 1, characterized in that the pressure element (7) comprises apart from the pressing part (28; 30a; 31a) an elastically compressible part (29; 30; 31) being integral with said pressing part.

3.    A locking seal as claimed in Claim 2, characterized in that the elastically compressible part (29) has the shape of bellows.

4.    A locking seal as claimed in Claim 2, characterized in that the elastically compressible part (30) has the shape of narrowing steps.

5.    A locking seal as claimed in Claim 2, characterized in that the elastically compressible part (31) has the tapering shape of a funnel.

6.    A locking seal as claimed in anyone of the preceding Claims, characterized in that the pressing part (28; 30a) is formed by an annular plate part, the peripheral rim (28a) of which is rounded off.

7.    A locking seal as claimed in anyone of Claims 2 to 6, characterized in that the end (29a; 30b; 31b) of the elastic compressible part (29; 30; 31) remote from the pressing part (28; 30a; 31a) is in engagement with the counter-element (8).

0142195

1/1

FIG. 1

FIG. 2

FIG. 3

FIG. 4

FIG. 5

HN 1 C

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | NL-A-8 104 082 (DAWSONVILLE) --- | | A 01 K 11/00 G 09 F 3/00 |
| A | FR-A-2 435 197 (VILLA-MASSONE) ----- | | |

TECHNICAL FIELDS SEARCHED (Int. Cl.4)

A 01 K

The present search report has been drawn up for all claims

| Place of search THE HAGUE | Date of completion of the search 07-02-1985 | Examiner VILBIG K |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82